# EUROPEAN PATENT APPLICATION

(11) **EP 4 574 412 A1**
(43) Date of publication of application: **25.06.2025**
(21) Application number: 24219531.1
(22) Date of filing: 12.12.2024
(51) Int. Cl.: B30B 9/20, B01D 33/00, B01D 33/06, B01D 33/64, A01C 3/04, A01K 1/01, B01D 33/067, B01D 33/46

(54) **PRESS AND ANIMAL-SHED VEHICLE HAVING SUCH A PRESS**

(30) Priority: 19.12.2023 NL 2036573
(71) Applicant: Lely Patent N.V., 3147 PB Maassluis (NL)
(72) Inventor: STOEL, Fokke, 3147 PB Maassluis (NL); STAPEL, Roelof, 3147 PB Maassluis (NL); VAN DEN BERG, Karel, 3147 PB Maassluis (NL)
(74) Representative: Octrooibureau Van der Lely N.V.

(57) **Abstract**

Press (1) for separating a slurry such as faeces (2) into a low-liquid fraction and into a liquid-rich fraction, comprising a pressure roller (3) with a flexible surface, a first and second perforated roller (4, 5) in order to, in cooperation with the pressure roller (3), carry out a first and, respectively, second pressing operation wherein the liquid-rich fraction is pressed through the holes of the perforated roller (4, 5), first adjusting means for adjusting the pressing pressure of the pressure roller (3) on the first perforated roller (4) and second adjusting means for adjusting the pressing pressure of the pressure roller (3) on the second perforated roller (5), wherein a central adjusting means (6) comprises the first and second adjusting means.

## Description

The present invention relates to a press for separating a slurry such as faeces into a low-liquid fraction and into a liquid-rich fraction.

In agriculture, slurry presses are generally used for separating slurry, a mixture of urine and faeces, into a liquid-rich fraction and into a low-liquid fraction. The low-liquid fraction predominantly contains manure fibres which are often used as litter. Such presses are relatively large and heavy and fitted in a stationary manner. A known type of manure press comprises a pressure roller which has a rubber coating and presses a liquid-rich fraction of the slurry through holes in a metal roller. A press of such a type is known from US6044980. In this manure press, the pressure roller is pressed against a first roller with holes (perforated roller) for a first pressing operation, after which the pressed low-liquid fraction is subjected to a second pressing operation by the same pressure roller and a second perforated roller. In order to be able to adjust the pressing pressure, for example to regulate the ratio between liquid-rich fraction and manure fibres, both perforated rollers are movably fitted in the frame of the press. By way of spring assemblies which are adjustable by means of bolts and act on the axle of the corresponding perforated roller, it is possible to adjust the pressure of the perforated roller on the pressure roller for each perforated roller. A disadvantage of this press is that the adjusting of the pressure or the adjusting of the ratio between the pressure of the first and second pressing operation is difficult and that, in order to adjust the ratio, both spring assemblies have to be adjusted separately.

It is the object of the invention to provide a compact and easily adjustable slurry press.

This is achieved by means of a press according to Claim 1. A single adjusting means can be used to adjust the pressing pressure both for the pressing operation involving the combination of pressure roller and first perforated roller and the pressing operation involving the combination of pressure roller and second perforated roller. Preferably, this adjustment, for example an adjustment of a spring which exerts a force on the pressure roller, takes place at one location on the machine which is easily accessible for an operator. The use of a single adjusting means for two adjustments produces a compact machine. This is particularly advantageous if the press is fitted to a vehicle where weight and compactness are important.

In an advantageous embodiment of the invention, the press is configured to guide the pressed low-liquid fraction from the first pressing operation to an infeed for the second pressing operation. By carrying out two pressing operations one after the other, in the first pressing operation it is possible to set the best process conditions, such as pressing pressure and hole density, for a relatively moist infeed, whereas for the second pressing operation it is possible to set process parameters for a relatively dry infeed.

In a further advantageous embodiment of the invention, the central adjusting means engages with the axle of the pressure roller. For this reason, the bearing of the axle of the pressure roller is not connected directly to the frame of the press, but can move slightly. A change of the force on the axle of the pressure roller changes the pressing pressure for both the first pressing operation and the second pressing operation.

In a particular embodiment of the invention, the central adjusting means is configured to adjust the angle at which the adjusting means engages with the axle. This angle is understood to mean the angle between the connecting line which connects the axle of the perforated roller to the pressure roller and the line along which the exerted force on the pressure roller runs. By adjusting this angle, it is possible to adjust the ratio between the pressing pressures for the first and second pressing operation. In this case, the pressure roller is supported on both perforated rollers. It is only when the central adjusting means exerts a force on the axle of the pressure roller along a traction line which is exactly in the middle between the connecting lines from the rotation axle of the pressure roller to the axle of the corresponding perforated roller that the pressure on the first and, respectively, second perforated roller is the same. Changing the orientation of this traction line changes the ratio between the pressures on the first and, respectively, second perforated roller.

In a further particular embodiment of the invention, the central adjusting means comprises a lever that is movable about a rotation point, and the rotation point is displaceable. The shifting of the rotation point changes the engagement angle of the central adjusting means on the pressure roller in a constructionally simple manner. This construction also makes it possible for the lever to be able to be placed at some distance from the rollers.

It is also advantageous if the central adjusting means comprises an adjustable force element in order to adjust the force with which the central adjusting means engages with the axle. This adjusting means may, for example, be a spring, the spring tension being adjustable by means of bolts. By fastening the force element to the long side of the lever, it is possible to obtain a large force on the pressure roller in a simple manner.

In particular, the force element comprises a plunger that is movable in a cylinder, which cylinder is fluidically connected to a fluid pump such as a compressor in order to be able to change the pressure in the cylinder. Fluidically connected is understood to mean that the pressing space of the fluid pump is connected via a line containing a fluid, such as compressed air, to the plunger.

In a further particular embodiment of the invention, the central adjusting means comprises a pressure or force sensor for delivering a force signal representative of the pressing pressure of the pressure roller on the first and/or second perforated roller and the fluid pump is controllable on the basis of the force signal. The pressing pressure can lapse due to play or wear. By continuously measuring the force actually applied and controlling the fluid pump on the basis of this measurement, it is possible for the pressure in the cylinder, and thus the force on the central adjusting means, to be kept constant.

Preferably, the press comprises a drive for driving only one or both perforated rollers. In this case, the pressure roller is driven by the friction with the driven perforated roller(s). Since the perforated roller is always at a fixed location on the press, a simple remote drive with a motor is possible. A drive for the pressure roller which is movable with respect to the frame requires a cumbersome construction. An additional advantage of the fact that not all the rollers are driven is that, in the event of a blockage, the non-driven roller can stop and cannot be damaged.

In a further preferred embodiment, the second perforated roller comprises fewer holes than the first perforated roller, preferably between 5% and 20% of the numbers of the first perforated roller. In the case of the low-liquid fraction being fed from the first pressing operation to the second pressing operation, since there will then be less moisture in the infeed, also fewer holes will be required to discharge the limited moisture. Experimentation has shown that the above-mentioned relative numbers provide the best results with the highest solids content in the case of two successive pressing operations.

In yet a further preferred embodiment, the second perforated roller comprises smaller holes than the first perforated roller. Due to the smaller holes, the pressing pressure on the second perforated roller can be greater, without a disproportionately large amount of solid matter such as fibres remaining. With smaller holes, the solid matter has a lower tendency to be pressed through the holes in the case of the higher pressures.

In an advantageous embodiment of the invention, the press comprises a pressing space with side walls for containing the pressure roller and the first and, respectively, second perforated roller, wherein the side walls of the pressing space fit tightly against the pressure roller. Preferably, the side of the pressure roller comprises a substance that slides easily in order to provide good sealing against the side wall without much friction.

In yet a further advantageous embodiment of the invention, the press comprises a pressing space with side walls for containing the pressure roller and the first and, respectively, second perforated roller, and wherein the first and, respectively, second perforated roller extend through at least one side wall. The pressure roller presses the liquid-rich fraction through the holes of a perforated roller to the inside of the partially hollow perforated roller. Via the passage through the side wall, the liquid-rich fraction is discharged outside the side wall.

In particular, the press comprises a moisture sensor for delivering a moisture signal and the force element is controllable on the basis of the moisture signal. The material to be pressed can change in terms of moisture content. In order to obtain an end product with a consistent composition, it is necessary to adjust the degree of pressing and thus the force on the pressure roller. For instance, the moisture content of cow faeces can be greatly dependent on the feed composition or on the time of year. The moisture sensor may be placed in the infeed of the product to be pressed or in the outfeed of the low-liquid flow.

The invention also relates to an animal-shed vehicle having a press according to the invention, wherein the animal-shed vehicle comprises a faeces pick-up device for picking up faeces from a floor and comprises a faeces feed for feeding the picked-up faeces to the press.

The invention will be discussed in more detail below with reference to a drawing, in which:
Figure 1 shows a schematic cut-away depiction of the press according to the invention;
Figure 2 shows a schematic side view of rollers of the press according to the invention;
Figure 3 shows an animal-shed vehicle having a press according to the invention for making manure fibres on-site.

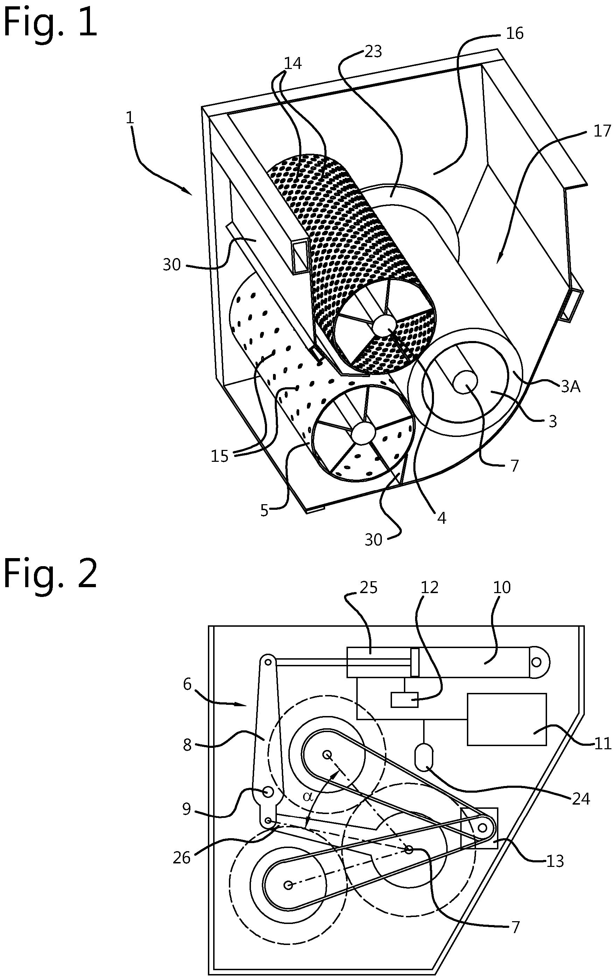

Figure 1 shows a press 1 for separating a slurry in the form of faeces 2 into a low-liquid fraction and into a liquid-rich fraction, comprising a pressure roller 3 with a flexible surface 3A, a first and second perforated roller 4, 5 in order to, in cooperation with the pressure roller 3, carry out a first and, respectively, second pressing operation wherein the liquid-rich fraction is pressed through the holes 14, 15 of the perforated roller 4, 5, first adjusting means for adjusting the pressing pressure of the pressure roller 3 on the first perforated roller 4 and second adjusting means for adjusting the pressing pressure of the pressure roller 3 on the second perforated roller 5, wherein a central adjusting means comprises the first and second adjusting means. The press 1 is configured to guide the pressed low-liquid fraction from the first pressing operation to an infeed for the second pressing operation. The second perforated roller 5 comprises approximately 10% of the number of holes 14 of the first perforated roller 4. The second perforated roller 5 comprises smaller holes 15 than the first perforated roller 4.

The press 1 comprises a pressing space 17 with side walls 16 for containing a supply of faeces 2. The pressure roller 3 and the first perforated roller 4 form the lower boundary of this pressing space 17. The two side walls 16, which are perpendicular to the rotation axle 7 of the pressure roller 3, fit tightly against the pressure roller 3. At the sides, the pressure roller 3 is provided with a smooth plastic washer 23. The first and, respectively, second perforated roller 5 extend through at least one side wall 16. The pressed liquid-rich fraction can thus flow via the interior of the perforated rollers 4, 5 to outside the pressing space 17. To this end, the perforated rollers 4, 5 are provided, on the inner side, with openings in the supports.

Figure 2 shows, in more detail, a side view of the outside of the pressing space 17. The press 1 comprises a drive in the form of an electric motor 13 for driving only one or both perforated rollers 4, 5. To this end, this electric motor 13 drives the axles of both perforated rollers 4, 5 via two chains. The circumferential speed of the two perforated rollers 4, 5 is the same in this case. The circumference of the pressure roller 3 and the two perforated rollers 4, 5 is indicated by an interrupted line. The pressure roller 3 is solely driven by friction with the perforated rollers 4, 5. In one embodiment that is not depicted, a perforated roller 4, 5 is driven by a motor fitted directly to the axle of the perforated roller 4, 5. A central adjusting means 6 is fitted, which engages with the axle 7 of the pressure roller. This is configured to adjust the angle α at which the central adjusting means 6 engages with the axle 7. The central adjusting means 6 further comprises a lever 8 that is movable about a rotation point 9, wherein the rotation point 9 is displaceable. To this end, the bearing of the rotation point 9 is displaceable in a vertical direction via slotted holes (not depicted). This bearing is able to be secured by means of bolts (not depicted). The central adjusting means 6 further comprises an adjustable force element 10 in order to adjust the force with which the central adjusting means 6 engages with the axle 7.

In one embodiment that is not depicted, this force element 11 consists of a tension spring. The tension at this tension spring is adjustable in a continuously variable manner with the aid of bolts in a manner known per se.

The part of the lever 8 below the rotation point 9, depicted in Figure 2, is connected to the bearing of the axle 7 by means of a connecting element 26. This bearing is slightly displaceably connected to the side wall 16.

In the embodiment depicted in Figure 2, the force element 10 comprises a plunger that is movable in a cylinder, which cylinder is fluidically connected to a fluid pump in the form of an air compressor 11 in order to be able to change the pressure in the cylinder. The central adjusting means 6 further comprises a pressure or force sensor 12 for delivering a force signal representative of the pressing pressure of the pressure roller 3 on the first and/or second perforated roller 4, 5 and the fluid pump is controllable on the basis of the force signal. A pressure sensor 12 which measures the pressure in the plunger space 25 of the cylinder is depicted. This pressure is representative of the force exerted via the lever 8 on the pressure roller 3. In order to not allow the pressure to fluctuate too greatly with fluctuations in the distance between the pressure roller 3 and the perforated roller 4, 5, a pressure vessel 24 is fitted which is connected to the fluid line to the cylinder. In this way, the pressure in the plunger space 25 remains stable by virtue of the fact that the size of this plunger space 25 can vary slightly depending on the quantity of material located between the pressure roller 3 and a perforated roller 4, 5.

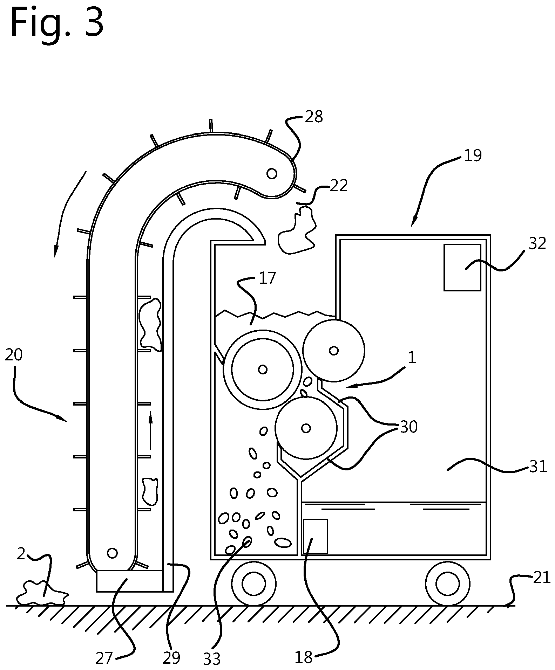

Figure 3 shows an autonomous animal-shed vehicle 19 having a press 1 and having a faeces pick-up device 20 for picking up faeces 2 from a floor 21 and comprising a faeces feed 22 for feeding the picked-up faeces 2 to the press 1. The vehicle 19 can move autonomously between animals in an animal space and pick up faeces 2 lying on a urine-permeable floor 21. The faeces pick-up device 20 is provided with a pusher 27 which feeds faeces 2 lying on the floor to a conveyor belt 28.

The animal-shed vehicle 19 operates as follows: faeces 2 is scraped up by the pusher 27 and carried along by the conveyor belt 28 along a guide plate 29. Faeces 2 is collected at the top in the pressing space 17. At the bottom of the pressing space 17, the faeces 2 is pressed between the pressure roller 3 and the first perforated roller 4 in a first pressing operation. Fibres and other solid substances are carried along between the pressure roller 3 and the first perforated roller 4 and subsequently fall into the space between the pressure roller 3 and the second perforated roller 5. The parts adhering to the surface of the first perforated roller 4 are scraped off by a scraper 30 (see also Figure 1). A liquid-rich fraction is pressed through the holes 15 of the first perforated roller 4 to the interior of the perforated roller 4. This fraction can flow through the interior of the perforated roller 4 to the side, where it can exit the perforated roller 4 on the outside of the side wall 16. The liquid-rich fraction subsequently flows into a liquid container 31 on the vehicle 19.

The low-liquid fraction from the first pressing operation passes through a second pressing operation by means of the second perforated roller 5 in an identical way as described above for the first pressing operation. The low-liquid fraction coming from this second pressing operation has a high proportion of manure fibres and is collected in the fibre space 33. A spreading device (not depicted) spreads the fibres from the fibre space 33 in the bedding of the animals. The liquid in the liquid container 31 is unloaded at a fixed dumping site in the animal shed.

The moisture content of the fibres is continuously measured using a moisture sensor 18 which delivers a moisture signal to a controller 32. If the moisture content is higher than a setting, the controller 32 controls the compressor 11 to a higher pressure. The higher pressure has the effect that the cylinder exerts a higher force on the lever, which in turn presses the pressure roller 3 more tightly against the perforated rollers 4, 5. The pressure in the plunger space 25 is continuously measured by the pressure sensor 12. If the measured pressure is lower than the desired level, for example due to a small leakage, the compressor 11 is activated until the desired pressure is reached.

In some cases, for example in the case of very dry faeces or wet faeces, the ratio between the first and second pressing operation has to be able to be adapted. This ratio is determined by the ratio between the pressing pressure of the first and second pressing operation. This ratio can be easily adapted by changing the placement of the rotation point 9. This changes the angle α (Figure 2) without changing the total force on the pressure roller 3. In one embodiment that is not depicted, the engagement of the connecting element 26 with the lever 8 is able to be changed, as a result of which the angle α changes.

In an alternative embodiment that is not depicted, the transmission of force from the force element 10 to the pressure roller 3 takes place via a cable, wherein the one end of the cable is connected to the plunger of the force element 10 and the other end is connected to the pressure roller 3. The cable is guided via guide rollers, wherein a guide roller is rotatable about the rotation point 9. The angle α that the cable forms with the pressure roller 3 is able to be changed by adjusting the rotation point 9 for this guide roller.

The press 1 according to the invention is described as an independent press 1 having a pressure roller 3 and two perforated rollers 4, 5. However, this combination can also form part of a larger unit, in which additional pressing operations take place upstream or downstream of the product flow.

Although a press 1 for pressing faeces 2 is described in the described examples, the invention is not limited to faeces 2 or other types of manure such as slurry, but rather is also suitable for other applications, such as the pressing of sewage sludge, food flows such as fruit juices, or slurries of paper pulp.

## Claims

1. Press (1) for separating a slurry such as faeces (2) into a low-liquid fraction and into a liquid-rich fraction, comprising a pressure roller (3) with a flexible surface, a first and second perforated roller (4, 5) in order to, in cooperation with the pressure roller (3), carry out a first and, respectively, second pressing operation wherein the liquid-rich fraction is pressed through the holes of the perforated roller (4, 5), first adjusting means for adjusting the pressing pressure of the pressure roller (3) on the first perforated roller (4) and second adjusting means for adjusting the pressing pressure of the pressure roller (3) on the second perforated roller (5), wherein a central adjusting means (6) comprises the first and second adjusting means.

2. Press (1) according to Claim 1, **characterized in that** the press (1) is configured to guide the pressed low-liquid fraction from the first pressing operation to an infeed for the second pressing operation.

3. Press (1) according to Claim 1 or 2, **characterized in that** the central adjusting means (6) engages with the axle (7) of the pressure roller (3).

4. Press (1) according to Claim 3, **characterized in that** the central adjusting means (6) is configured to adjust the angle (α) at which the central adjusting means (6) engages with the axle (7).

5. Press (1) according to Claim 4, **characterized in that** the central adjusting means (6) comprises a lever (8) that is movable about a rotation point (9), and wherein the rotation point (9) is displaceable.

6. Press (1) according to one of Claims 3 to 5, **characterized in that** the central adjusting means (6) comprises an adjustable force element (10) in order to adjust the force with which the central adjusting means (6) engages with the axle (7).

7. Press (1) according to Claim 6, **characterized in that** the force element (10) comprises a plunger that is movable in a cylinder, which cylinder is fluidically connected to a fluid pump such as a compressor (11) in order to be able to change the pressure in the cylinder.

8. Press (1) according to Claim 7, **characterized in that** the central adjusting means (6) comprises a pressure or force sensor (12) for delivering a force signal representative of the pressing pressure of the pressure roller (3) on the first and/or second perforated roller (4, 5) and the fluid pump (11) is controllable on the basis of the force signal.

9. Press (1) according to one of the preceding claims, **characterized in that** the press (1) comprises a drive (13) for driving only one or both perforated rollers (4, 5).

10. Press (1) according to one of the preceding claims, **characterized in that** the second perforated roller (5) comprises fewer holes (14) than the first perforated roller (4), preferably between 5% and 20% of the number of the first perforated roller (4).

11. Press (1) according to one of the preceding claims, **characterized in that** the second perforated roller (5) comprises smaller holes (14) than the first perforated roller (4).

12. Press (1) according to one of the preceding claims, **characterized in that** the press (1) comprises a pressing space (17) with side walls (16) for containing the pressure roller (3) and the first and, respectively, second perforated roller (4, 5), wherein at least one and preferably both side walls (16) of the pressing space (17) fit tightly against the pressure roller (3).

13. Press (1) according to one of the preceding claims, **characterized in that** the press (1) comprises a pressing space (17) with side walls (16) for containing the pressure roller (3) and the first and, respectively, second perforated roller (4, 5), and wherein the first and, respectively, second perforated roller (4, 5) extend through at least one side wall (16).

14. Press (1) according to one of Claims 6 to 13, **characterized in that** the press (1) comprises a moisture sensor (18) for delivering a moisture signal and the force element (10) is controllable on the basis of the moisture signal.

15. Animal-shed vehicle (19) having a press (1) according to one of the preceding claims, **characterized in that** the animal-shed vehicle (19) comprises a faeces pick-up device (20) for picking up faeces (2) from a floor (21) and comprises a faeces feed (22) for feeding the picked-up faeces (2) to the press (1).
